# EUROPÄISCHE PATENTANMELDUNG

(11) **EP 1 251 426 A1**
(43) Veröffentlichungstag der Anmeldung: **23.10.2002**
(21) Anmeldenummer: 01109689.8
(22) Anmeldetag: 19.04.2001
(51) Int. Cl.: G06F 9/40

(54) **Applikationsintegrator für Informationsverarbeitungssysteme**

(71) Anmelder: 1PlusON Informationstechnologien GmbH, 28279 Bremen (DE)
(72) Erfinder: Müller, Jürgen, 28857 Syke (DE); Voigtmann, Peter, 90443 Nürnberg (DE); Voigtmann, Rainer, Dr., 28857 Syke (DE)
(74) Vertreter: Grünecker, Kinkeldey, Stockmair & Schwanhäusser Anwaltssozietät

(57) **Zusammenfassung**

Die Erfindung betrifft einen Applikationsintegrator für verschiedenartige Informationsverarbeitungssysteme zum Zugriff auf die Schnittstellen der Informationsverarbeitungssysteme und/oder zur internen Verarbeitung und/oder zur Umsetzung von Datenstrukturen, Datenformaten und Dateninhalten zwischen Anwendungssystemen der Informationsverarbeitungssysteme und/oder zur Steuerung von Austauschprozessen zwischen den Informationsverarbeitungssystemen. Der erfindungsgemäße Applikationsintegrator umfasst eine Mehrzahl von Integrationsmodulen, die in wenigsten zwei Hierachieebenen angeordnet sind, wobei jedes Integrationsmodul derart strukturiert ist, dass es einen Teil A und einen Teil B umfasst, wobei der Teil A eines jeden Integrationsmoduls so ausgebildet ist, dass durch ihn eine Kommunikation dieses Integrationsmoduls mit wenigstens einem Integrationsmodul einer niedrigeren und/oder einer höheren Hierachieebene realisierbar ist, und durch die Teile A aller Integrationsmodule die Bearbeitungsreihenfolge aller Integrationsmodule innerhalb des Applikationsintegrators festgelegt ist, und der Teil B eines jeden Integrationsmoduls so ausgebildet ist, dass ein Zugriff auf die Schnittstellen der Informationsverarbeitungssysteme und/oder eine interne Verarbeitung und/oder eine Umsetzung von Datenstrukturen, Datenformaten und Dateninhalten zwischen Anwendungssystemen der Informationsverarbeitungssysteme und/oder eine Steuerung von Austauschprozessen zwischen den Informationsverarbeitungssystemen realisierbar ist. Weiterhin stellt die Erfindung ein Verfahren zur Herstellung eines derartigen Applikationsintegrators in einem Arbeitsspeicher eines Computersystems zur Verfügung. Darüber hinaus stellt die Erfindung auch Verfahren zum Betreiben eines derartigen Applikationsintegrators zur Verfügung.

## Beschreibung

### Gebiet der Erfindung

Die Erfindung betrifft einen Applikationsintegrator für verschiedenartige Informationsverarbeitungssysteme zum Zugriff auf die Schnittstellen der Informationsverarbeitungssysteme und/oder zur internen Verarbeitung und/oder zur Umsetzung von Datenstrukturen, Datenformaten und Dateninhalten zwischen Anwendungssystemen der Informationsverarbeitungssysteme und/oder zur Steuerung von Austauschprozessen zwischen den Informationsverarbeitungssystemen.

### Stand der Technik

In Unternehmen, Einrichtungen und Institutionen sind für die einzelnen Aufgaben und Funktionsbereiche verschiedene Informationsverarbeitungssysteme unterschiedlicher Hersteller im Einsatz. Unter dem Begriff Informationsverarbeitungssysteme sind Systemplattformen, Betriebssysteme und darauf residierenden Anwendungssysteme zu verstehen, wie sie beispielsweise für bestimmte betriebswirtschaftliche oder technische Aufgabenstellungen zum Einsatz kommen. Zunehmend besteht die Notwendigkeit diese einzelnen Informationsverarbeitungssysteme und damit die einzelnen inkompatiblen Anwendungssysteme zu einem Gesamtsystem zusammenzufügen. Dazu sind die Schnittstellen der Informationsverarbeitungssysteme so miteinander zu verbinden, dass die Datenflüsse zwischen den Anwendungssystemen optimal an die jeweiligen Geschäftsprozesse angepasst werden können.

Individuell programmierte Schnittstellen können so erstellt werden, dass sie den vollen, für einen speziellen Geschäftsvorgang benötigten Funktionsumfang leisten. Nachteile sind jedoch der dafür benötigte hohe Aufwand, die lange Entwicklungszeit, die Fehleranfälligkeit einer individuellen Lösung und die damit verbundenen extrem hohen Kosten, insbesondere auch für die Pflege der starren Integrationslösungen.

Es ist außerdem bekannt, neben individuell programmierten Schnittstellen, zunehmend Integrationstools einzusetzen. Diese Integrationstools, bestehen typischer Weise aus einzelnen Komponenten mit denen auf die Schnittstellen der Informationsverarbeitungssysteme zugegriffen wird und aus Komponenten die eine Umsetzung von Datenstrukturen, Datenformaten und Dateninhalten zwischen den Informationsverarbeitungssystemen ermöglichen, wobei die einzelnen Module sequenziell nacheinander abgearbeitet werden.

Bei einem aus der US 6,094,688 bekannten Integrationstool werden die für den Zugriff auf die Informationsverarbeitungssysteme zuständigen Komponenten auch dazu benutzt, um Datenstrukturen, Datenformate und Dateninhalte in spezielle, dem jeweiligen Geschäftsprozessen zugeordnete Businessobjekte umzusetzen. Diese Businessobjekte sind verallgemeinert, so dass sie kompatibel zu den meisten Informationsverarbeitungssystemen sind, die entsprechende Geschäftsprozesse unterstützen. Andere Komponenten sorgen nach einem vorgefertigten Schema für die interne Verarbeitung und interne Weiterleitung dieser verallgemeinerten Businessobjekte.

Bekannte Integrationstools als Alternative zu individuell programmierten Schnittstellen bieten einen nur beschränkten Funktionsumfang. Der damit realisierbare Datenaustausch zwischen den Systemen erfüllt nur bedingt die Anforderungen der Geschäftsprozesse. Oft sind zusätzliche Programmierarbeiten notwendig.

Weiterhin erfordert die Umsetzung von Datenstrukturen, Datenformaten und Dateninhalten in verallgemeinerte Businessobjekte und deren Verarbeitung in gesonderten Komponenten einen hohen Vorbereitungs- und Abstimmungsaufwand mit den Herstellern unterschiedlicher Informationsverarbeitungssysteme, so dass diese Lösung kostenintensiv ist. Auch hier sind zusätzliche Programmierarbeiten notwendig, wenn die Datenstrukturen eines Informationsverarbeitungssysteme nicht kompatibel zu den internen Businessobjekten sind.

Angesichts der zuvor diskutierten Nachteile der Applikationsintegratoren gemäß dem Stand der Technik, liegt der Erfindung die Aufgabe zugrunde, einen Applikationsintegrator für Informationsverarbeitungssysteme zu schaffen, mit dem eine flexible Anpassung der Datenströme zwischen den Informationsverarbeitungssystemen an die gewünschten Geschäftsprozesse mit geringem Aufwand und ohne individuelle Schnittstellenprogrammierung möglich ist.

### Beschreibung der Erfindung

Diese Aufgabe wird durch einen Applikationsintegrator gelöst, der eine Mehrzahl von Integrationsmodulen, die in wenigsten zwei Hierachieebenen angeordnet sind aufweist, wobei jedes Integrationsmodul derart strukturiert ist, dass es einen Teil A und einen Teil B umfasst. In dem erfindungsgemäßen Applikationsintegrator ist der Teil A eines jeden Integrationsmoduls so ausgebildet, dass durch ihn eine Kommunikation dieses Integrationsmoduls mit wenigstens einem Integrationsmodul einer niedrigeren und/oder einer höheren Hierachieebene realisierbar ist, und durch die Teile A aller Integrationsmodule die Bearbeitungsreihenfolge aller Integrationsmodule innerhalb des Applikationsintegrators festgelegt ist, und der Teil B eines jeden Integrationsmoduls so ausgebildet, dass ein Zugriff auf die Schnittstellen der Informationsverarbeitungssysteme und/oder eine interne Verarbeitung und/oder eine Umsetzung von Datenstrukturen, Datenformaten und Dateninhalten zwischen Anwendungssystemen der Informationsverarbeitungssysteme und/oder eine Steuerung von Austauschprozessen zwischen den Informationsverarbeitungssystemen realisierbar ist.

Weiterhin wird die obenstehende Aufgabe gelöst durch ein Verfahren zur Erzeugung eines derartigen Applikationsintegrators mit dem Schritt eines Erzeugens der Teile A und Teile B eines jeden Integrationsmoduls in einem Arbeitsspeicher eines Computersystems.

Zur besonders vorteilhaften Lösung der Aufgabe stellt die Erfindung weiterhin ein Verfahren zum Betreiben eines derartigen Applikationsintegrators zur Verfügung, in welchem Daten aus einem Informationsverarbeitungssystem übernommen und/oder Daten verarbeitet und/oder Datenstrukturen, Dateninhalte und Datenformate umgesetzt und/oder Daten an ein Informationsverarbeitungssystem übergeben und/oder die Übertragungsprozesse zwischen Informationsverarbeitungssystemen gesteuert werden, und die Abarbeitung der einzelnen Integrationsmodule in einer dem gewünschten Datenfluss zweckdienlichen Reihenfolge innerhalb einer Hierarchie festlegt werden, wobei bei der Abarbeitung eines jeden Integrationsmoduls die Integrationsmodule der unter diesem Integrationsmodul liegenden Hierachieebene einbezogen werden.

Der erfindungsgemäße Applikationsintegrator wird mittels eines Computerprogramms in einem aus handelsüblichen Komponenten bestehenden Computersystem, vorzugsweise auf Basis objektorientierter Technologien, erzeugt und benutzt verfügbare kommerzielle Hardware und Softwarekomponenten, um beispielsweise über ein Netzwerk auf die zu integrierenden Informationsverarbeitungssysteme zuzugreifen. Der Applikationsintegrator wird vorzugsweise im Arbeitsspeicher des Computersystems erstellt.

Innerhalb eines Applikationsintegrators können die Integrationsmodule auf Basis eines vorgegebenen Schemas flexibel angeordnet und in einer vordefinierten Reihenfolge abgearbeitet werden. Damit gelingt eine optimale Anpassung der Datenflüsse zwischen mehreren Informationsverarbeitungssystemen an die jeweiligen Geschäftsprozesse.

Die Integrationsmodule sind nach einem einheitlichen Bauplan ausgebildet. Sie bestehen aus den Teilen A und B. Im Teil A gleichen sich alle Integrationsmodule in ihren Eigenschaften und Verarbeitungsmethoden. Der Teil B beinhaltet individuelle, dem speziellen Zweck des jeweiligen Integrationsmoduls entsprechende Eigenschaften und Verarbeitungsmethoden. Entweder dient der spezielle Teil B der Integrationsmodule der Initialisierung und Steuerung der Datenaustauschprozesse oder dem Datenaustausch und der Datenumwandlung selbst.

Die Eigenschaften der Integrationsmodule können unterschiedliche Ausprägungen im Sinne von Eigenschaftswerten haben, z.B.: Eigenschaft = Position innerhalb einer Hierarchieebene, Eigenschaftswert = "1", "2", ... . Diese Eigenschaften werden in der Regel durch Steuerparameter beschrieben.

Durch die jeweilige Ausprägung der Eigenschaften wird die Anordnung der Integrationsmodule innerhalb des Applikationsintegrators bestimmt und ihre Identität in Bezug auf die konkrete Arbeitsweise festgelegt. Das geschieht im Zuge der Konfiguration des Applikationsintegrators für einen speziellen Datenaustauschprozess in einer Designphase mit Hilfe, eines Designertools und vor Ausführung einer ersten Übertragung. Über eine Benutzeroberfläche werden die einzelnen Integrationsmodule entsprechend der konkreten Aufgabenstellung ausgewählt, in einer zweckentsprechenden Ausführungsreihenfolge innerhalb des Applikationsintegrators angeordnet und hinsichtlich ihrer Funktionsweise definiert. Dabei werden die konkreten Werte für die Eigenschaften der Integrationsmodule festgelegt und vorzugsweise in einer Datenbank gespeichert.

Sollen Datenaustauschprozesse entsprechend dem vorgegebenen Muster ausgeführt werden, erzeugt der Applikationsintegrator die zum jeweiligen Übertragungsprozess gehörenden Integrationsmodule im Computersystem auf Basis der in der Datenbank gespeicherten Eigenschaftswerte.

Mehrere Datenaustauschprozesse können parallel ausgeführt werden. Das betrifft sowohl Datenaustauschprozesse auf Basis derselben Konfigurationsdaten, als auch solche mit unterschiedlichen Konfigurationsdaten. Zur Realisierung dieser Parallelverarbeitung werden Verfahren eingesetzt, die mit modernen Computersystemen und entsprechenden Programmiersprachen dafür zur Verfügung stehen.

Die Integrationsmodule sind über ihre jeweiligen Teile A in einer Hierarchie in der Weise miteinander verbunden, dass von einem Rootintegrationsmodul (Integrationsmodul auf der höchsten Hierarchieebene) ausgehend, jedem Integrationsmodul jeweils mehrere Integrationsmodule in einer darunter liegenden Hierarchieebene zugeordnet sind. Jedem dieser Integrationsmodule können wiederum Integrationsmodule in einer nächsttieferen Hierarchieebene zugeordnet sein. Die Zahl der Hierarchieebenen ist beliebig. Ebenso ist die Zahl der Integrationsmodule auf einer Hierarchieebene beliebig.

Durch die in den Teilen A der Integrationsmodule verankerten Eigenschaften kennt jedes Integrationsmodul das ihm übergeordnete Integrationsmodul und die Position innerhalb der Bearbeitungsreihenfolge einer Hierarchieebene. Damit ist die Anordnung der Integrationsmodule innerhalb des Applikationsintegrators und ihre Bearbeitungsreihenfolge vollständig bestimmt.

In den Teilen A der Integrationsmodule sind auch die Eigenschaften und Methoden verankert, mittels derer die Aufeinanderfolge der einzelnen Schritte eines Datenaustauschprozesses über die einzelnen Hierarchieebenen hinweg gesteuert wird. Beginnend mit dem Rootintegrationsmodul wird jedes Integrationsmodul in einheitlicher Weise über seinen Teil A initialisiert. Von dort wird im Zuge der Verarbeitung in den Teil B verzweigt, um die spezifischen Funktionen des Integrationsmoduls auszuführen.

Nach Rückkehr in den Teil A werden die untergeordneten Integrationsmodule in die Verarbeitung einbezogen. Das übergeordnete Integrationsmodul bringt alle untergeordneten Integrationsmodule zur Verarbeitung, wenn es sich um eine synchrone Verarbeitung in der untergeordneten Hierarchieebene handelt. Sonst prüft das übergeordnete Integrationsmodul, ob sich die Bearbeitung eines Integrationsmoduls in der untergeordneten Hierarchieebene an die Bearbeitung seines Vorgängers anschließen soll. Trifft das nicht zu (es handelt sich in der untergeordneten Hierarchieebene um einen asynchronen Übertragungsprozess), wird der Verarbeitungsgang in der untergeordneten Hierarchieebene abgebrochen. Die Nachfolgemodule werden dann später durch einen neuen Initialisierungsvorgang zur Ausführung gebracht.

Nach Abschluss der Bearbeitung meldet sich jedes Integrationsmodul bei seinem übergeordneten Integrationsmodul zurück. Das kann durch Beenden der Verarbeitungsmethode selbst erfolgen (bei sequenzieller Verarbeitung) oder dadurch, dass im übergeordneten Integrationsmodul ein Ereignis ausgelöst bzw. eine Rückrufmethode angewandt wird (bei Parallelverarbeitung). Damit wird die Steuerung an das übergeordnete Integrationsmodul abgegeben. Von diesem wird das nächste Integrationsmodul entsprechend der Initialisierungsreihenfolge angestoßen.

Durch den erfindungsgemäßen Applikationsintegrator, das erfindungsgemäße Verfahren zur Erzeugung des Applikationsintegrators und das erfindungsgemäße Verfahren zum Betreiben des Applikationsintegrators werden eine Vielzahl von Vorteilen gegenüber dem Stand der Technik erzielt.

So sind die Schnittstellen und Datenströme zwischen den Informationsverarbeitungssystemen mit geringen Aufwand realisierbar. Weiterhin können Schnittstellen und Datenströme mit geringem Aufwand flexibel an die geforderten Geschäftsprozesse angepasst werden. Darüber hinaus können Änderungen der Schnittstellen, die auf Grund von Änderungen in Geschäftsprozessen notwendig sind, mit minimalem Aufwand realisiert werden. Für das Erstellen und Ändern von Schnittstellen sind außerdem keine Programmierkenntnisse erforderlich.

Die implementierten Lösungen sind unanfällig gegenüber neuen Versionen (Releases) der Anwendungssysteme.

Das Einrichten der Schnittstellen kann über eine benutzerfreundliche Oberfläche durch Einstellung aller Merkmale in einem übersichtlichen Dialog erfolgen. Darüber hinaus ist kein Zugang zum Quellcode der Anwendungssysteme erforderlich.

Es können durch den erfindungsgemäßen Applikationsintegrator asynchrone oder quasisynchrone Online-Verbindungen und/oder synchrone Verbindungen realisiert werden. Die Datenübertragungen können hierbei als Transaktionen ausgeführt werden.

Die Umsetzung von Datenstrukturen, Dateninhalten und Datenformaten erfolgt direkt von einem Informationsverarbeitungssystem in ein anders, ohne dass eine gesonderte verallgemeinerte Zwischenstruktur erzeugt werden muss.

Alle Übertragungsprozesse können zentral verwaltet und kontrolliert werden. Das betrifft das Protokollieren der Abläufe und die Fehlerbehandlung aber auch die Einstellung der Parameter für den Systembetrieb.

Es können mehrere Übertragungsprozesse gleichzeitig ausgeführt werden.

Die Lösung Ist skalierbar, d.h. mit wenigen Komponenten können einzelne Schnittstellen zwischen einzelnen Informationsverarbeitungssystemen realisiert werden. Für komplexe Aufgabenstellungen werden schrittweise weitere Module hinzugefügt.

Zur Abwicklung von Geschäftsprozessen mit hohem Datenflussaufkommen kann das System erweitert werden bis hin zur Lastverteilung auf mehrere Computersysteme.
Dazu werden einzelne Integrationsmodule gegebenenfalls mit der ihnen untergeordneten Hierarchie oder mit Teilen der untergeordneten Hierarchie auf verschiedenen Computern zur Ausführung gebracht, die miteinander über ein Netzwerk verbunden sind. Damit kann der Applikationsintegrator höchsten Asprüchen an die Performance gerecht werden.

Der erfindungsgemäß Applikationsintegrator kann auch dazu benutzt werden, um Inhalte eines Repository aus einem Informationsverarbeitungssystem auszulesen und In Strukturen und Inhalte umzusetzen, die für die Definition eines Datencontainers benötigt werden.

Eine Vielzahl weiterer Vorteile ergibt sich aus den besonderen Ausgestaltungen des Applikationsintegrators, des Verfahrens zum Erzeugen des Applikationsintegrators sowie des Verfahrens zum Betreiben des Applikationsintegrators, wie sie in den abhängigen Ansprüchen beschrieben sind.

### Ausführungsformen der Erfindung

Im folgenden wird die Erfindung anhand bevorzugter Ausführungsformen unter Bezugnahme auf die Zeichnung beschrieben. In der Zeichnung zeigen:
- Figur 1: das Schema einer hierarchischen Anordnung und der Bearbeitungsreihenfolge der Integrationsmodule einer ersten Ausführungsform des Applikationsintegrators gemäß der vorliegenden Erfindung;
- Figur 2a: die hierarchische Anordnung, Bearbeitungs- und Initialisierungsreihenfolge für die Beispielkonfiguration eines Applikationsintegrators einer zweiten Ausführungsform des Applikationsintegrators gemäß der vorliegenden Erfindung zur bidirektionalen Übertragung inhaltlich korrelierter Nachrichten, die zeitlich von einander unabhängig im Sinne eines asynchronen Prozesses zwischen zwei Informationsverarbeitungssystemen ausgetauscht werden;
- Figur 2b: das Datenflussschema für den Applikationsintegrator gemäß Figur 2a;
- Figur 3a: die hierarchische Anordnung, Bearbeitungs- und Initialisierungsreihenfolge für die Beispielkonfiguration eines Applikationsintegrators einer dritten Ausführungsform des Applikationsintegrators gemäß der vorliegenden Erfindung zur Übertragung von Nachrichten zwischen zwei Informationsverarbeitungssystemen wobei die vom ersten Informationsverarbeitungssystem wiederholt bereitgestellten Nachrichten Im Applikationsintegrator gesammelt und bei Erfüllung eines festzulegenden Kriteriums geschlossen an das zweite Informationsverarbeitungssystem übertragen werden;
- Figur 3b: das Datenflussschema für den Applikationsintegrator gemäß Figur 3a;
- Figur 4a: eine hierarchische Anordnung, Bearbeitungs- und Initialisierungsreihenfolge für die Beispielkonfiguration eines Applikationsintegrators einer vierten Ausführungsform des Applikationsintegrators gemäß der vorliegenden Erfindung zum Zusammenführen und logischen Verknüpfen von Datenstrukturen aus verschiedenen Informationsverarbeitungssystemen und deren Übertragung in ein Ziel-Informationsverarbeitungssystem;
- Figur 4b: das Datenflussschema für den Applikationsintegrator gemäß Figur 4a;
- Figur 5a: eine hierarchische Anordnung, Bearbeitungs- und Initialisierungsreihenfolge für die Beispielkonfiguration eines Applikationsintegrators einer fünften Ausführungsform des Applikationsintegrators gemäß der vorliegenden Erfindung zur Übertragung von Datenstrukturen eines Informationsverarbeitungssystem auf verschiedene andere Informationsverarbeitungssystemen
- Figur 5b: das Datenflussschema für den Applikationsintegrator gemäß Figur 5a;
- Figur 6a: eine hierarchische Anordnung, Bearbeitungs- und Initialisierungsreihenfolge für die Beispielkonfiguration eines Applikationsintegrators einer sechsten Ausführungsform des Applikationsintegrators gemäß der vorliegenden Erfindung zur Übertragung von Datenstrukturen zwischen zwei Informationsverarbeitungssystemen mit eigener Schlüsselvergabe bei gleichzeitigem Erstellen und Speichern einer Zuordnungsstruktur für die Schlüssel beider Systeme.
- Figur 6b: das Datenflussschema für den Applikationsintegrator gemäß Figur 6a.

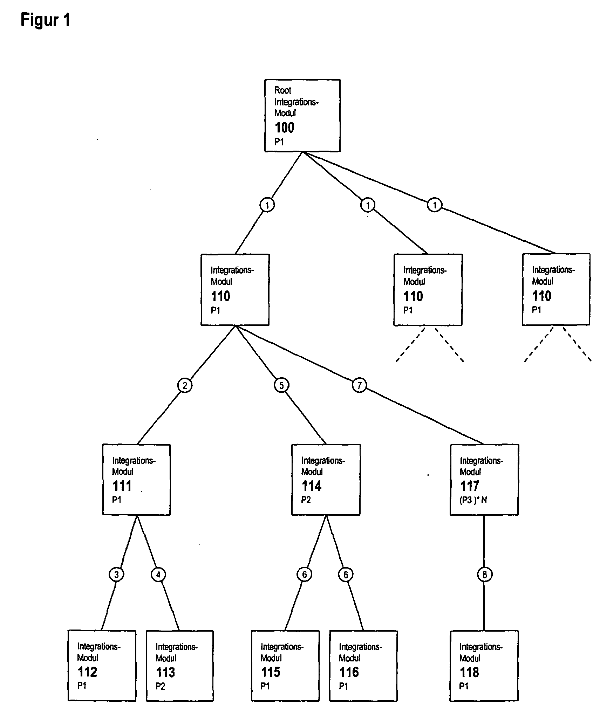

Figur 1 zeigt eine erste Ausführungsform des Integrationsapplikators gemäß der vorliegenden Erfindung.

Insbesondere veranschaulicht Figur 1 schematisch den Aufbau eines Applikationsintegrators, den zugehörigen Bearbeitungsablauf und die Initialisierungsreihenfolge. Dargestellt ist beispielhaft eine hierarchische Anordnung von Integrationsmodulen auf vier Ebenen. Jedes Integrationsmodul wird durch ein Rechteck repräsentiert. Seine Position in der Bearbeitungsreihenfolge ist mit P1, P2, ... innerhalb seiner Hierarchieebene gekennzeichnet.

Integrationsmodule auf einer Hierarchieebene, die demselben Integrationsmodul untergeordnet sind und dieselbe Positionsnummer haben, werden parallel ausgeführt. Dabei kann es sich um baugleiche Integrationsmodule, d.h. mit gleichen Eigenschaften handeln (in Figur 1 die Module 110), oder um unterschiedliche Integrationsmodule mit unterschiedlichen Eigenschaften (in Figur 1 die Module 115 und 116).

Bei der Verarbeitung wird geprüft, ob ein Integrationsmodul mehrfach nacheinander ausgeführt werden soll. In dem Fall werden die Nachfolgemodule erst dann angestoßen, wenn die mehrfache Bearbeitung des Vorgängers nach Erreichen eines bestimmten Kriteriums abgeschlossen ist. Eines dieser Kriterien kann beispielsweise das Erreichen eines vorgegebenen Zeitpunktes oder eine vorgegebene Anzahl von Wiederholungen sein. Im Schema ist die Mehrfachausführung eines Integrationsmoduls durch (PX)*N gekennzeichnet (vgl. Integrationsmodul 117).

Zusätzliche Steuerungs- und Initialisierungsmechanismen werden durch eine Gruppe von Integrationsmodulen realisiert, deren Teile B speziell dafür ausgeprägte Eigenschaften und Funktionen haben. Diese Module initialisieren und steuern den Verarbeitungsablauf der jeweils untergeordneten Integrationsmodule. Sie koordinieren auch den Datenaustausch zwischen mehreren Informationsverarbeitungssystemen in der ihnen untergeordneten Hierarchieebene in Form einer Transaktion. Durch die zweckmäßige Einordnung dieser Integrationsmodule in die Hierarchie wird eine hohe Flexibilität in der Anpassung des Applikationsintegrators an unterschiedliche Aufgabenstellungen erreicht. Die Initialisierungsreihenfolge der Module ist in Figur 1 bis 6 durch die mit Nummern versehenen Verbindungslinien zwischen den Modulen gekennzeichnet ((1), (2), (3),...).

Ein Typ dieser Integrationsmodule steuert die synchrone Verarbeitung aller Integrationsmodule der untergeordneten Hierarchie. Hierbei werden alle Integrationsmodule in der angegebenen Reihenfolge nacheinander abgearbeitet.

Ein anderer Typ initiiert und steuert den Ablauf asynchroner Verarbeitungsprozesse. In dem Fall wird nach Abarbeitung eines untergeordneten Integrationsmoduls geprüft, ob dessen Nachfolger auf der gleichen Hierarchieebene unmittelbar im Anschluss ausgeführt, oder durch ein externes Ereignis (z.B. durch einen Scheduler oder ein Informationsverarbeitungssystem) gesondert angestoßen wird. Im ersten Fall wird mit der Bearbeitung unmittelbar fortgefahren. Im zweiten Fall wird die Steuerung an das übergeordnete Integrationsmodul zurückgegeben. Die Abarbeitung der Folgemodule wird dann in einem gesonderten Übertragungsprozess ausgeführt. Dieser beginnt mit einer erneuten Initialisierung über das Rootintegrationsmodul und die Modulhierarchie, um auf der entsprechenden Ebene mit dem angeforderten Integrationsmodul fortzufahren.

Die andere Gruppe von Integrationsmodulen realisiert mit ihren speziellen Eigenschaften und Methoden im Teil B den Zugriff auf die Schnittstelle eines Informationsverarbeitungssystems oder die interne Verarbeitung von Daten, um die Strukturen, Inhalte und Formate an die jeweiligen Ziel-Informationsverarbeitungssysteme anzupassen.

Diese Integrationsmodule können entsprechend einer nicht dargestellten Ausführungform einen oder mehrere Datencontainer erstellen, in die sie auf Basis eines einheitlichen Formalismus die zwischen den Informationsverarbeitungssystemen auszutauschenden Daten und ergänzende Informationen ablegen bzw. aus denen sie Daten und hinzugefügte Informationen entnehmen können. Jeder Datencontainer ist untergliedert in ein oder mehrere Segmente. Jedes Segment ist durch eine feste Datenstruktur definiert. Ein Segment kann sich unbestimmt oft wiederholen. Segmente können in Gruppen zusammengefasst werden, die sich ebenfalls unbestimmt oft wiederholen können.

Der Formalismus, mit dem Integrationsmodule auf einen Datencontainer zugreifen, stützt sich auf Metadaten, die den konkreten Aufbau eines Datencontainers beschreiben. Die Metadaten werden beim Einrichten eines Applikationsintegrators in einem Metadatencontainer hinterlegt, der ähnlich wie ein Datencontainer aufgebaut ist. Die Metadaten enthalten alle benötigten Informationen über den Aufbau der zwischen den Informationssystemen auszutauschenden Nachrichten. Das betrifft die Struktur der einzelnen Segmente, die Zugehörigkeit der Segmente zu Segmentgruppen und die Häufigkeit, mit der die Segmente in einer Nachricht vorhanden sein können bzw. müssen. Durch eine konkrete Ausprägung eines Metadatencontainers wird eine spezielle Nachrichtenstruktur definiert, die unabhängig von Standards ist. Mit ihr lassen sich die Strukturen aller gängigen Nachrichtenstandards beschreiben.

Jedem Integrationsmodul sind definierte Sektionen innerhalb eines Datencontainers für den Datenzugriff bzw. die Datenablage zugeordnet. Als Sektion wird ein logischer Bereich innerhalb des Datencontainers bezeichnet, der aus einzelnen Segmenten oder Segmentgruppen bestehen kann.

Integrationsmodule können Datencontainer bzw. entsprechende Verweise auf Datencontainer innerhalb der Hierarchie an andere Integrationsmodule weitergeben. Das geschieht auf Basis der Im Teil A der Integrationsmodule verankerten Eigenschaften und Verarbeitungsmethoden, Datencontainer, die im Arbeitsspeicher des Computers erstellt worden sind, können in einen permanenten Datencontainer übertragen werden und aus diesem wieder in den Arbeitspeicher zurückübertragen werden. Auf diese Weise werden Datencontainer zwischen Integrationsmodulen weitergegeben, die in einem asynchronen Verarbeitungsprozess miteinander verbunden sind.

In ähnlicher Weise kann mittels der Teile A der Integrationsmodule ein Wiederaufsetzen von Übertragungsprozessen an bestimmten Teilschritten der Übertagung realisiert werden, so dass angemessen auf Ausnahmesituationen reagiert werden kann. Auch kann der permanente Datencontainer einem Analysetool zur Verfügung gestellt werden, um in der Designphase die Arbeitsweise eines Integrationsmoduls überprüfen zu können oder im Rahmen von Datenübertragungen den Inhalt einer Nachricht zur Anzeige zu bringen.

Neben den beschriebenen Integrationsmodulen kann der Applikationsintegrator gemäß einer nicht dargestellten Ausführungsform weitere Komponenten, die Servicefunktionen wahrnehmen, enthalten.

Eine dieser Servicefunktionen dient der Initiierung der Austauschprozesse. Ein Scheduler gestattet das zeitgesteuerte Initiieren von Übertragungsprozessen aus dem Applikationsintegrator heraus. Dazu löst der Scheduler ein entsprechendes Ereignis im Applikationsintegrator aus, das über die Hierarchie der Integrationsmodule an die betreffenden Integrationsmodule weitergeleitet wird. Zusätzliche Komponenten reagieren auf die Anforderungen eines Informationsverarbeitungssystem zur Datenübertragung. In einer auf die Schnittstelle des Anwendungssystems abgestimmten Weise kommunizieren diese Komponenten mit dem betreffenden Informationsverarbeitungssystem und lösen in der zuständigen Servicekomponente des Applikationsintegrators ein ebensolches Ereignis aus, das über die Hierarchie der Integrationsmodule weitergeleitet wird und den Übertragungsvorgang initiiert.

Weitere Servicemodule dienen dem Monitoring und Protokollieren der Übertragungsvorgänge, der Fehlervermeidung und Fehlerbehandlung sowie der Einstellung von Parametern für den Systembetrieb. Dazu werden von Teil A der Integrationsmodule Statusund Protokollinformationen an die Komponenten weitergeleitet und anwenderorientiert aufbereitet, die von verschiedenen Integrationsmodulen im jeweiligen Teil B während der Ausführung von Übertragungsprozessen generiert werden. Gleiches gilt für Informationen, die für die Behandlung von Fehler- und Ausnahmesituationen benötigt werden.

Jedem Übertragungsprozess wird eine eindeutige mit einem Zeitstempel versehene Kennung aufgeprägt. Diese wird an alle am Übertragungsprozess beteiligten Integrationsmodule weitergegeben, so dass deren Aktivität und die durch sie ausgelösten Ereignisse auch bei paralleler und/oder asynchroner Verarbeitung einander zugeordnet und im Protokoll verfolgt werden können.

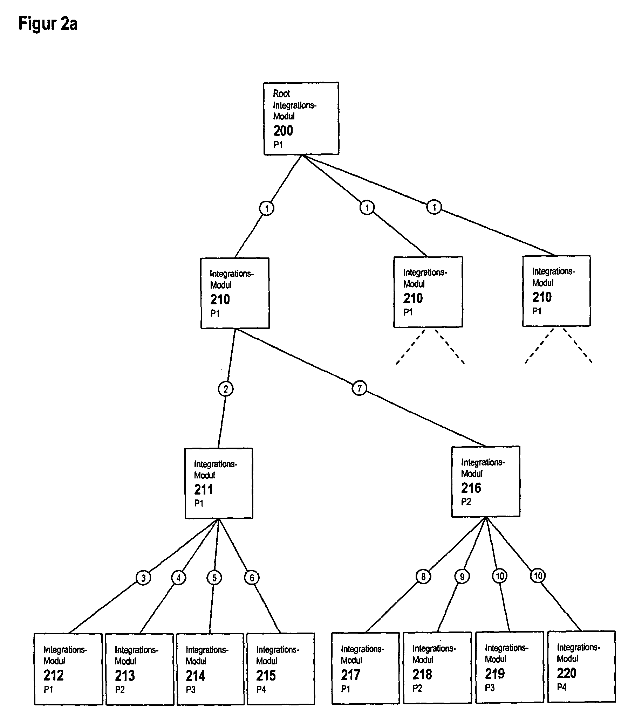

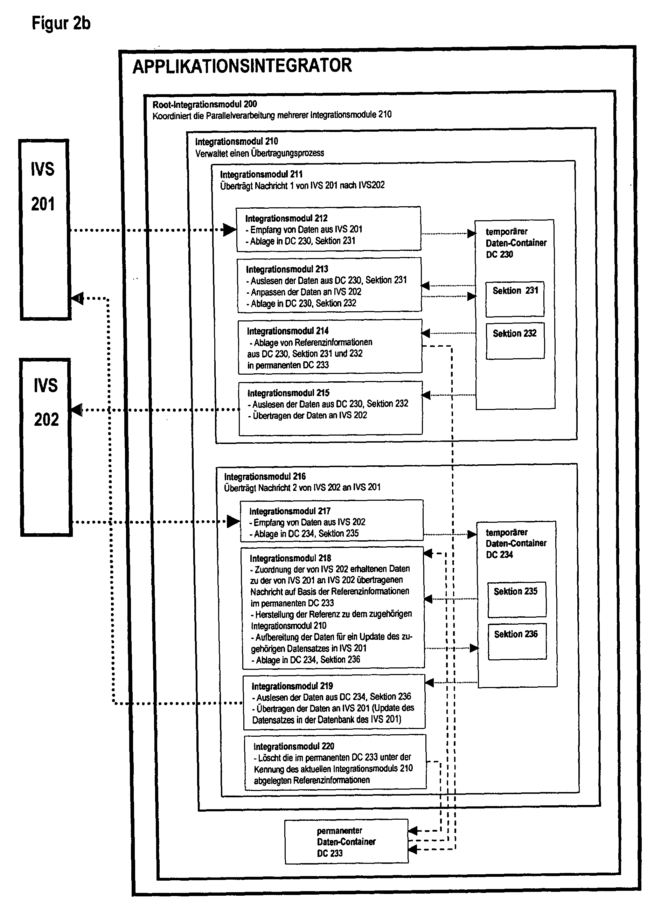

Figur 2a und 2b zeigen eine zweite Ausführungsform eines Applikationsintegrators gemäß der vorliegenden Erfindung. Insbesondere ist die Beispielkonfiguration eines Applikationsintegrators zur bidirektionalen asynchronen Übertragung von inhaltlich korrelierten Informationen zwischen einem Informationsverarbeitungssystem 201 und einem Informationsverarbeitungssystem 202 dargestellt.

Figur 2a beschreibt hierbei die hierarchische Anordnung sowie die Bearbeitungs- und Initialisierungsreihenfolge der Integrationsmodule, Figur 2b den Datenfluss zwischen den Informationsverarbeitungssystemen und dem Applikationsintegrator sowie Innerhalb des Applikationsintegrator.

Eine Konkretisierung für einen solchen Datenaustausch ist ein Transportauftrag, der in Informationsverarbeitungssystem 201 ausgelöst und als Nachricht 1 an Informationsverarbeitungssystem 202 gesendet wird. Informationsverarbeitungssystem 202 führt den Transportauftrag aus. Der zugrunde liegende Geschäftsprozess verlangt, dass Informationsverarbeitungssystem 201 eine Bestätigung über den ausgeführten Transportauftrag erhält. Informationsverarbeitungssystem 202 ist in der Lage, eine Vollzugsmeldung zu diesem Transportauftrag in Form einer Nachricht 2 bereitzustellen. Weiter wird beispielhaft angenommen, dass Informationsverarbeitungssystem 201 die Vollzugsmeldung in Form eines Updates des zugehörigen Datensatzes in der Datenbanktabelle aller erteilten Transportaufträge erwartet. Im allgemeinen muss davon ausgegangen werden, dass mehrere solche Geschäftsvorgänge parallel ausgeführt werden. Damit wird die Zuordnung der jeweils zueinander gehörenden asynchron ablaufenden Teilprozesse notwendig, die von den Integrationsmodulen 211 und 216 zur Ausführung gebracht werden.

In Figur 2a ist die hierarchische Anordnung und die Bearbeitungsreihenfolge der einzelnen Integrationsmodule wiedergegeben. Die Hierarchie der Integrationsmodule besteht aus einem Rootintegrationsmodul 200, dem mehrere parallel und unabhängig voneinander zu verarbeitende Integrationsmodule 210 untergeordnet sind. Zu jedem Integrationsmodul 210 gehören in der darunter liegenden Hierarchieebene zwei Integrationsmodule 211 und 216, die sequenziell abgearbeitet werden. Den Integrationsmodulen 211 und 216 sind auf einer weiteren Hierarchieebene jeweils vier Integrationsmodule untergeordnet. Sie realisieren den Zugriff auf die Informationsverarbeitungssysteme bzw. die Verarbeitung der zu übertragenden Daten.

Figur 2b zeigt den Datenfluss zwischen den Informationsverarbeitungssystemen und dem Applikationsintegrator sowie innerhalb desselben. In Figur 2b spiegelt sich die Hierarchie der Integrationsmodule in einer verschachtelten Anordnung wieder.

Die Zuordnung der beiden durch die Integrationsmodule 211 und 216 repräsentierten Übertragungsprozesse erfordert unter den Bedingungen parallel ablaufender, durch Integrationsmodul, 210 dargestellter asynchroner Geschäftsprozesse besondere Vorkehrungen. Dazu wird von Rootintegrationsmodul 200 ein permanenter Datencontainer 233 eingerichtet und verwaltet. In diesen hinterlegen alle Integrationsmodule 211 Referenzinformationen. Die Referenzinformationen enthalten alle benötigen Daten zur Identifikation eines Transportauftrages im Informationsverarbeitungssystem 201 und die zugehörenden Daten zur Identifikation des Transsportauftrages im Informationsverarbeitungssystem 202.

In der von Informationsverarbeitungssystem 202 an Informationsverarbeitungssystem 201 zurückgesendeten Nachricht 2 sind die Daten zur Identifikation des Transportauftrages im Informationsverarbeitungssystem 202 enthalten. Die Integrationsmodule 216 greifen über die ihnen untergeordneten Integrationsmodule auf den permanenten Datencontainer 233 zu und ermitteln aus den darin enthaltenen Referenzinformationen die Zuordnung zu dem zugehörigen an Informationsverarbeitungssystem 202 ergangenen Transportauftrag.

Der Gesamtprozess läuft im Applikationsintegrator wie folgt ab. Ergeht an den Applikationsintegrator die Anforderung, einen Transportauftrag von Informationsverarbeitungssystem 201 an Informationsverarbeitungssystem 202 zu senden, wird ein neues Integrationsmodul 210 erstellt und mit ihm das in der untergeordneten Hierarchieebene in der Ausführungsreihenfolge an Position 1 stehende Integrationsmodul sowie die Integrationsmodule 212 bis 215.

Integrationsmodul 211 überträgt durch die sequenzielle Abarbeitung der Integrationsmodule 212 bis 215, die Daten aus Informationsverarbeitungssystemen 201 ins Informationsverarbeitungssystem 202. Integrationsmodul 212 empfängt die Daten aus Informationsverarbeitungssystem 201, erstellt den Datencontainer Datencontainer 230 im Arbeitsspeicher des Computersystems und legt die Daten in Sektion 231 ab. Die Struktur der Sektion 231 des Datencontainers 230 wird aus der Strukturbeschreibung des Metadatencontainers abgeleitet, der dem Integrationsmodul 212 in der Designphase zugeordnet worden ist.

Im nächsten Schritt werden mittels des Integrationsmoduls 213, die in Datencontainer 230 Sektion 231 abgelegten Daten so verarbeitet, dass sie in Ihrer Datenstruktur, in ihren Dateninhalten und in ihren Datenformaten kompatibel zur entsprechenden Datenschnittstelle des Informationsverarbeitungssystem 202 sind. Das Ergebnis der Verarbeitung entsteht in Sektion 232 des Datencontainer 230.

Integrationsmodul 214 überträgt die Teile der in Datencontainer 230 gespeicherten Daten in den permanenten Datencontainer, Datencontainer 233, die für die spätere Zuordnung zwischen dem an Informationsverarbeitungssystem 202 gesendeten Transportauftrag und der vom Informationsverarbeitungssystem 202 zurückgegebenen Nachricht 2 benötigt werden.

Im letzten von Integrationsmodul 211 ausgeführten Schritt überträgt Integrationsmodul 215 die in Sektion 232 des Datencontainers 230 abgelegten Daten in einer zum Informationsverarbeitungssystem 202 kompatiblen Nachricht über die entsprechende Schnittstelle ins Informationsverarbeitungssystem 202.

Damit ist die Übertragung der Nachricht 1 von Informationsverarbeitungssystem 201 an Informationsverarbeitungssystem 202 abgeschlossen. Integrationsmodul 210 verfügt Über die Information, dass das Integrationsmodul 216 nicht direkt im Anschluss an Integrationsmodul 211 zu bearbeiten ist und gibt die Steuerung an das übergeordnete Rootintegrationsmodul zurück.

Nach Ausführung des Transportauftrages unter Kontrolle von Informationsverarbeitungssystem 202, wird von diesem die Nachricht 2 erstellt. Zu einem gegebenen Zeitpunkt ergeht an den Applikationsintegrator die Anforderung, die Nachricht 2 zu verarbeiten und als Vollzugsmeidung zum zugehörenden Transportauftrag ins Informationsverarbeitungssystem 201 zu übertragen.

Im Applikationsintegrator erfolgt die Initialisierung wieder über das Rootintegrationsmodul 200. Auf Grund der Parallelverarbeitung verwaltet Integrationsmodul 200 zu diesem Zeitpunkt gegebenenfalls mehrere Integrationsmodule 210, bei denen der erste, durch Integrationsmodul 211 ausgeführte Teil des Datenaustausches zwischen Informationsverarbeitungssystem 201 und Informationsverarbeitungssystem 202 abgeschlossen ist. Vom Applikationsintegrator muss die Zuordnung zu demjenigen Integrationsmodul 211 getroffen werden, das die zur eingegangen Nachricht 2 gehörende Nachricht 1 versendet hat.

Dazu erstellt Rootintegrationsmodul 200 ein neues Integrationsmodul 216, das zunächst keinem der vorhandenen Integrationsmodule 210 zugeordnet wird. Mit ihm werden die untergeordneten Integrationsmodule 217 bis 220 erstellt und sequenziell abgearbeitet. Im ersten Schritt übernimmt Integrationsmodul 217 die Nachricht 2 von Informationsverarbeitungssystem 202, erstellt den Datencontainer 234 gemäß des ihm zugeordneten Metadatencontainers und legt die Nachricht 2 in Datencontainer 234, Sektion 235 ab.

Integrationsmodul 218 greift mittels des ihm zugeordneten Metadatencontainer auf die Teile der Nachricht 2 zu, in denen die Referenzinformationen zu dem an Informationsverarbeitungssystem 202 ergangenen Transportauftrag abgelegt sind. Auf Basis dieser Daten wertet Integrationsmodul 218 die im Datencontainer 233 von den Integrationsmodulen 214 hinterlegten Referenzinformationen aus, ermittelt die für ein Update des zugehörenden Datensatzes im Informationsverarbeitungssystem 201 benötigten Daten und legt diese in Datencontainer 234 Sektion 236 ab.

Im dritten Schritt führt Integrationsmodul 219 unter Verwendung der im Datencontainer 234 Sektion 236 aufbereiteten Daten ein Update auf der Datenbanktabelle des Informationsverarbeitungssystem 201 aus, in dem die erstellten Transportaufträge gespeichert sind.

Mit Herstellung der Referenz zwischen Nachricht 2 und dem zugehörigen Transportauftrag wird auch die Zuordnung zu dem Integrationsmodul 210 getroffen, das den Transportauftrag von Informationsverarbeitungssystem 210 an Informationsverarbeitungssystem 2-02 übertragen hat. Damit können die von Integrationsmodul 216 zu liefernden Protokollinformationen unter der Kennung des Integrationsmoduls 210 erstellt werden. Nachdem Integrationsmodul 219 die Verarbeitung beendet hat, werden die unter der Kennung des Integrationsmoduls 210 im permanenten Datencontainer 233 enthaltenen Referenzinformationen gelöscht, Der asynchrone, von Integrationsmodul 210 getragene Gesamtübertragungsprozess wird abgeschlossen.

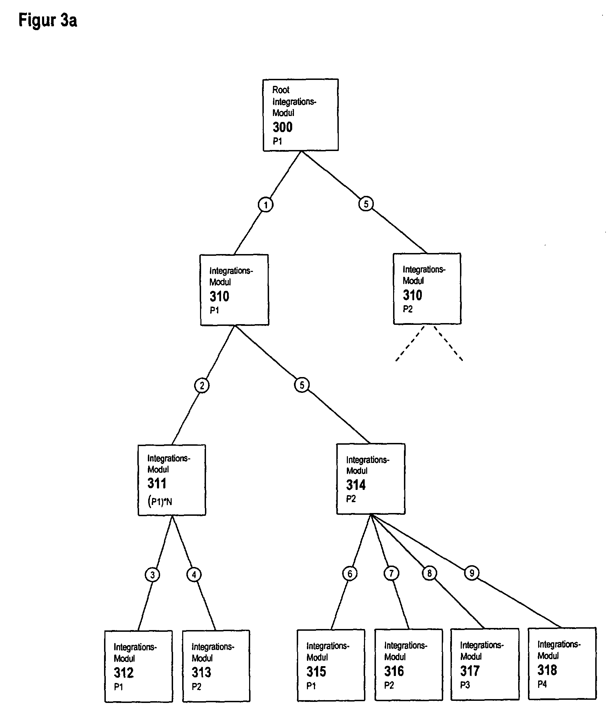

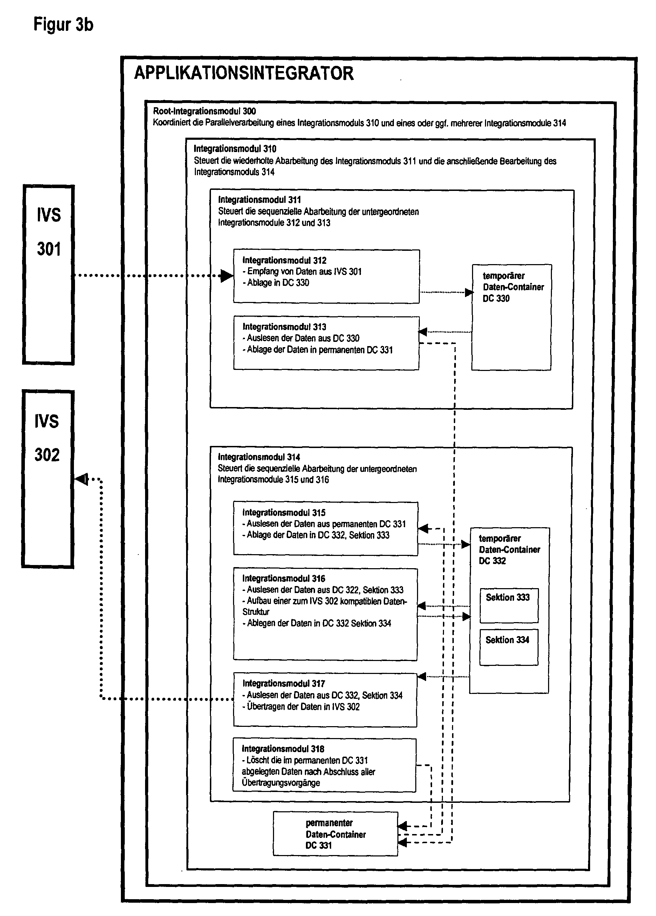

Eine weitere Beispielkonfiguration für einen Applikationsintegrator gemäß einer dritten Ausführungsform der vorliegenden Erfindung zeigen Figur 3a und 3b. Hier werden die von einem Informationsverarbeitungssystem 301 wiederholt bereitgestellten Nachrichten im Applikationsintegrator gesammelt und nach Erreichen eines vordefinierten Zeitpunktes oder nach Erreichen einer vorgegebenen Anzahl gesammelter Nachrichten als geschlossene Nachricht an Informationsverarbeitungssystem 302 übertragen.

Figur 3a beschreibt die hierarchische Anordnung sowie die Bearbeitungs- und Initialisierungsreihenfolge der Integrationsmodule, Figur 3b den Datenfluss zwischen den Informationsverarbeitungssystemen und dem Applikationsintegrator sowie innerhalb desselben.

Die Hierarchie der Integrationsmodule beginnt mit dem Rootintegrationsmodul 300. Ihm sind Integrationsmodule 310 untergeordnet, von denen zunächst nur eins initialisiert wird (vgl. Figur 3a), Jedem Integrationsmodul 310 sind in der darunter liegenden Hierarchieebene zwei Integrationsmodule 311 und 314 zugeordnet, die In zeitlicher Reihenfolge nacheinander abgearbeitet werden.

Integrationsmodul 311 dient. dem Sammeln der Nachrichten in einem von ihm erstellten permanenten Datencontainer 331 (Figur 3b), Integrationsmodul 312 empfängt die Nachrichten aus Informationsverarbeitungssystem 301 und erstellt aus ihnen den temporären Datencontainer 330. Im nächsten Schritt übernimmt Integrationsmodul 313 die Daten des Datencontainers 330 und legt sie im permanenten Datencontainer 331 ab. Das Integrationsmodul 311 wird wiederholt ausgeführt, bis eines der o.g. Kriterien erreicht ist.

Unmittelbar danach schließt sich die Abarbeitung des Integrationsmoduls 314 an. Dies umfasst drei Schritte. Integrationsmodul 315 liest die Daten aus Datencontainer 331 aus und erstellt den temporären Datencontainer 332 mit der Sektion 333. Im zweiten Schritt wird von Integrationsmodul 316 eine zu Informationsverarbeitungssystem 302 kompatible Nachricht in Sektion 334 des Datencontainers 332 unter Verwendung der Daten von Sektion 333 im Datencontainer 332 erstellt. Im dritten Schritt übernimmt Integrationsmodul 317 die Daten aus Sektion 334 des Datencontainers 332 und überträgt sie ins Informationsverarbeitungssystem 302. Nach erfolgreichem Abschluss wird der permanente Datencontainer mittels Integrationsmodul 318 gelöscht.

Parallel zu Integrationsmodul 314 wird ein neues Integrationsmodul 310 mit den zugehörigen untergeordneten Hierarchieebenen erzeugt, so dass die Übernahme von Daten aus Informationsverarbeitungssystem 301 mit dem neuen Integrationsmodul 310 fortgesetzt werden kann, während die Übertragung der Daten zum Informationsverarbeitungssystem 302 im ersten Integrationsmodul 310 mittels Integrationsmodul 314 noch ausgeführt wird.

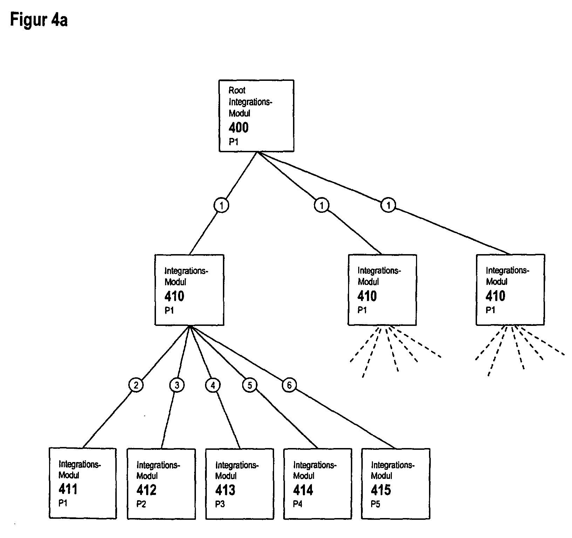

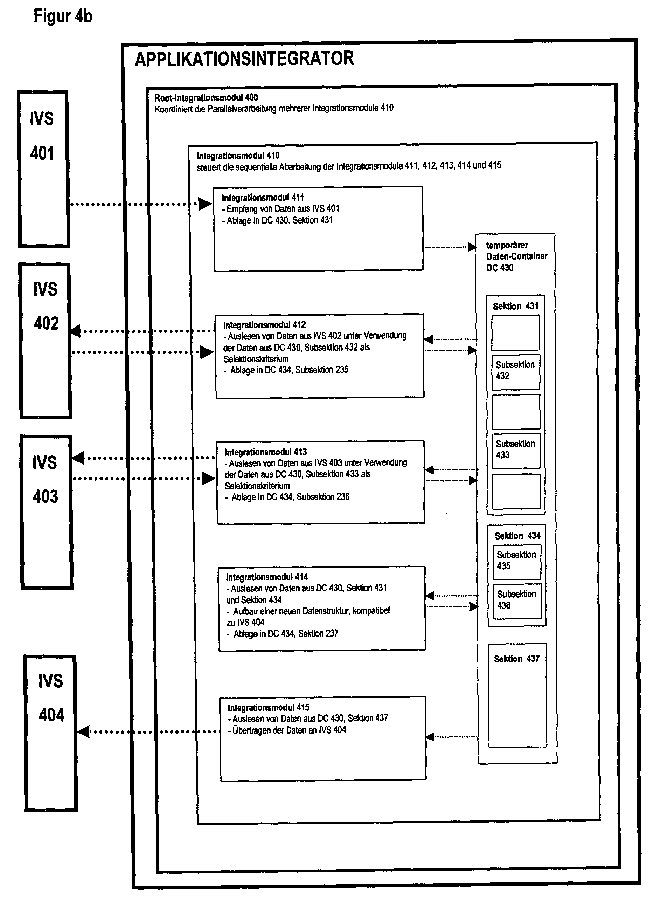

Figur 4a und 4b zeigen die Beispielkonfiguration für einen Applikationsintegrator gemäß einer vierten Ausführungsform der vorliegenden Erfindung, bei dem Datenstrukturen aus verschiedenen Informationsverarbeitungssystemen zusammengeführt, logisch verknüpft und anschließend als Nachricht einem Ziel-Informationsverarbeitungssystem übertragen werden. Figur 4a beschreibt die hierarchische Anordnung sowie die Bearbeitungs- und Initiierungsreihenfolge der Integrationsmodule, Figur 4b den Datenfluss zwischen den Informationsverarbeitungssystemen und dem Applikationsintegrator sowie innerhalb des Applikationsintegrators.

Die Hierarchie der Integrationsmodule besteht aus einem Rootintegrationsmodul 400, und mehreren parallel arbeitenden Integrationsmodulen 410. Jedem Integrationsmodul 410 sind in der darunter liegenden Hierarchieebene fünf Integrationsmodule 411 bis 415 zugeordnet (vgl. Figur 4a), die sequentiell im Rahmen einer Transaktion abgearbeitet werden.

Der Übertragungsprozess wird über das Rootintegrationsmodul 400 von Informationsverarbeitungssystem 401 ausgelöst. Integrationsmodul 411 empfängt die Daten aus Informationsverarbeitungssystem 401 und erstellt aus Ihnen den Datencontainer 430 mit der Sektion 431. Sektion 431 des Datencontainers 430 untergliedert sich in verschiedene Subsektionen (vgl. Figur 4b).

Subsektion 432 enthält Daten unter deren Verwendung Zusatzinformationen aus dem Informationsverarbeitungssystem 402 zu beschaffen sind. Dem dient Integrationsmodul 412. Es liest die Daten aus Subsektion 432 des Datencontainer 430, verwendet sie als Selektionskriterium und erstellt mit ihnen eine Datenbankabfrage im Informationsverarbeitungssystem 402. Die vom Informationsverarbeitungssystem 402 zurückgegebenen Daten werden im Datencontainer 430, Subsektion 435 abgelegt.

In ähnlicher Weise, benutzt Integrationsmodul 413 Daten der Subsektion 433 im Datencontainer 430 um weitere, für den Datenaustauschprozess benötigte Information aus Informationsverarbeitungssystem 403 zu ermitteln. Die von Informationsverarbeitungssystem 403 zurückgegebenen Daten werden in Subsektion 436 des Datencontainers 430 abgelegt.

Im vierten Schritt erstellt Integrationsmodul 414 eine für Informationsverarbeitungssystem 404 bestimmte und zu Informationsverarbeitungssystem 404 kompatible Nachricht, indem es die Daten der Sektionen 431 und 434 des Datencontainers 430 ausgewertet, logisch verknüpft und in Sektion 437 des Datencontainers 430 ablegt.

In einem abschließenden Schritt, überstellt Integrationsmodul 415, die Daten aus Sektion 437 des Datencontainers 430 als eine zu Informationsverarbeitungssystem 404 kompatible Nachricht ins Informationsverarbeitungssystem 404.

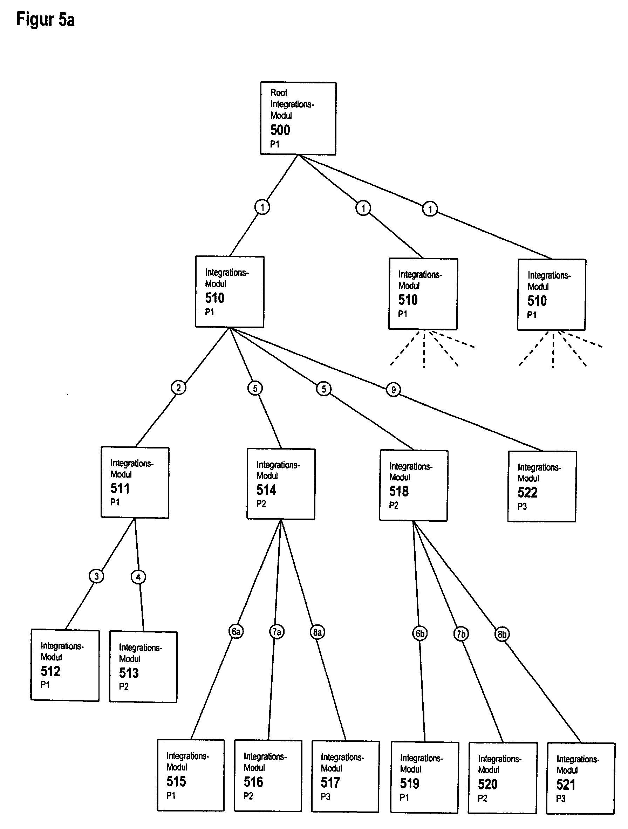

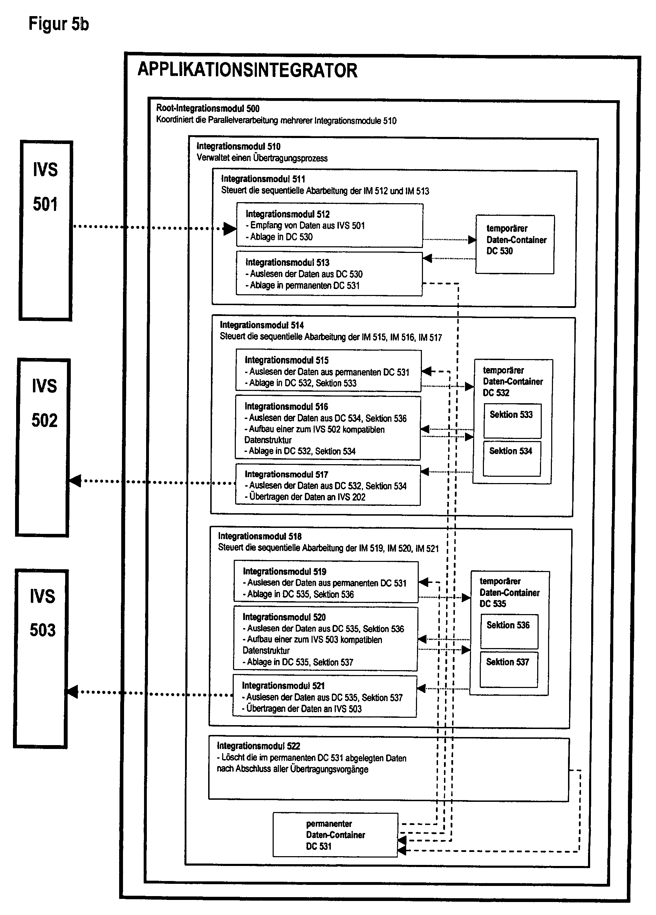

Figur 5a und 5b zeigen die Beispielkonfiguration für einen Applikationsintegrator gemäß einer fünften Ausführungsform der vorliegenden Erfindung zur Übertragung von Datenstrukturen eines Informationsverarbeitungssystem 501 in die Informationsverarbeitungssysteme 502 und 503.

Figur 5a beschreibt die hierarchische Anordnung sowie die Bearbeitungs- und Initialisierungsreihenfolge der Integrationsmodule, Figur 5b den Dateneinfluss zwischen den Informationsverarbeitungssystemen und dem Applikationsintegrator sowie innerhalb desselben.

Die Hierarchie der Integrationsmodule besteht aus einem Rootintegrationsmodul 500, dem in der darunter liegenden Hierarchieebene mehrere parallel und unabhängig voneinander zu verarbeitende Integrationsmodule 510 zugeordnet sind. Jedem Integrationsmodul 510 sind vier Integrationsmodule 511, 514, 518 und 522 untergeordnet. Die Verarbeitung innerhalb der Integrationsmodule 511, 514 und 518 erfolgt innerhalb einer Transaktion.

Nach Initialisierung über Rootintegrationsmodul 500 und Integrationsmodul 510 liest Integrationsmodul 512 Daten aus Informationsverarbeitungssystem 501 und erstellt aus ihnen den temporären Datencontainer 530. Im nächsten Schritt, übernimmt Integrationsmodul 513, die Daten des Datencontainers 530 und überstellt sie in einen Datencontainer 531, der auf einem permanenten Datenspeicher angelegt wird.

In der zweiten von Integrationsmodul 514 ausgeführten Transaktion, liest das Integrationsmodul 515, die Daten aus dem Datencontainer 531 aus und erstellt den temporären Datencontainer 532 mit der Sektion 533. Im nächsten, von Integrationsmodul 516 ausgeführten Schritt, wird eine zu Informationsverarbeitungssystem 502 kompatible Nachrichtenstruktur erstellt. Dazu werden die Daten aus Sektion 533 von dem Datencontainer 532 in ihren Strukturen, Inhalten und Formaten entsprechend umgesetzt und in Sektion 534 von Datencontainer 532 abgelegt. Im letzten Teilschritt übernimmt Integrationsmodul 517 die Daten der Sektion 534 im Datencontainer 532 und übergibt sie über eine Schnittstelle dem Informationsverarbeitungssystem 502.

Anschließend wird mit Integrationsmodul 518 eine Transaktion ausgeführt, um die im Datencontainer 531 gespeicherten Daten ins Informationsverarbeitungssystem 503 zu überführen. Dazu werden in ähnlicher Weise wie in Integrationsmodul 514 entsprechende Schritte ausgeführt, um die Daten an die Strukturen, Inhalte und Formate des Informationsverarbeitungssystem 503 anzupassen und anschließend in Informationsverarbeitungssystem 503 zu überführen.

Nach erfolgreichem Abschluss der von den Integrationsmodulen 511, 514 und 518 ausgeführten Verarbeitungsschritte wird der permanente Datencontainer 531 mittels Integrationsmodul 522 gelöscht. Tritt bei der Verarbeitung einer der von Integrationsmodul 511, 514 oder 518 ausgeführten Transaktionen ein Fehler auf, wird die Ausführung des Integrationsmoduls 510 vor Bearbeitung des Integrationsmoduls 522 abgebrochen. Es setzt der oben beschriebene Mechanismus zum Wiederaufsetzen ein. Nach der Fehlerbehebung wird die abgebrochene Transaktion wiederholt. Bereits abgeschlossenen Transaktionen bleiben davon unberührt.

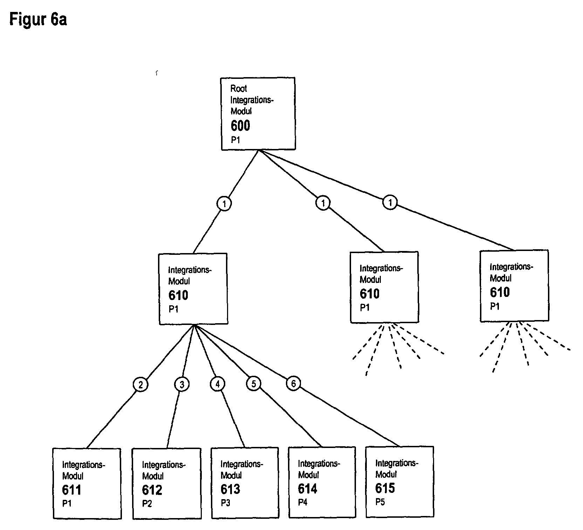

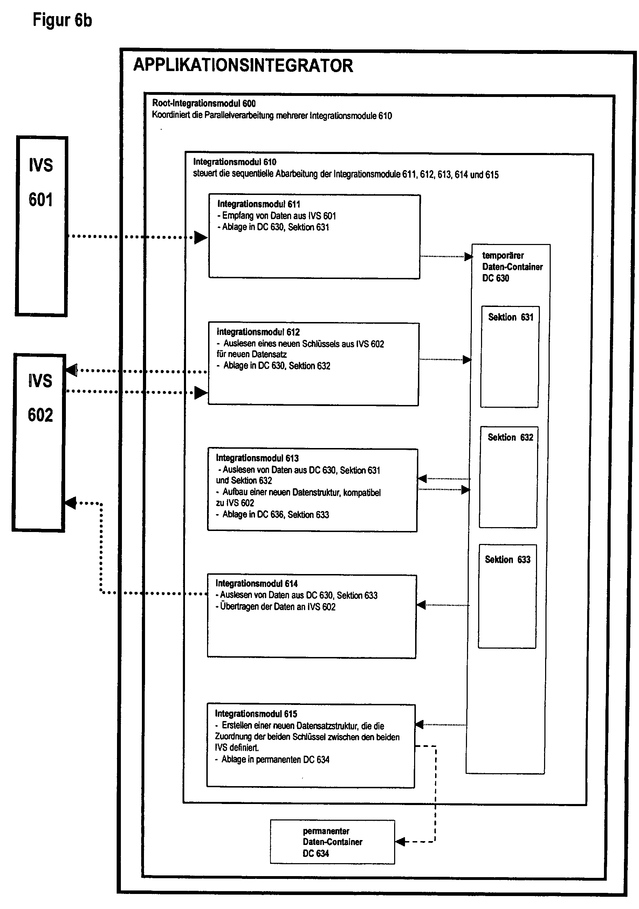

Figur 6a und 6b zeigen die Beispielkonfiguration für einen Applikationsintegrator gemäß einer sechsten Ausführungsform der vorliegenden Erfindung zur Übertragung von Daten zwischen zwei Informationsverarbeitungssystemen, die beide unabhängig voneinander eigene Schlüssel vergeben. Im Beispiel (Figur 6b) wird im Informationsverarbeitungssystem 601 eine neuer Datensatz erstellt, der in das Informationsverarbeitungssystem 602 in einer zu Informationsverarbeitungssystem 602 kompatiblen Form übertragen wird.

Mit dem Anlegen dieses Datensatzes im Informationsverarbeitungssystem 602 wird vom Applikationsintegrator eine Zuordnungsstruktur erstellt und in einem permanenten Speichermedium abgelegt. Damit wird eine eindeutige Zuordnung der Datensätze in beiden Systemen ermöglicht. So kann später wechselweise, z.B. bei einem Update der Datensätze, auf den jeweils zugehörigen Datensatz im anderen System zugegriffen werden.

Die Hierarchie der Integrationsmodule wird durch das Rootintegrationsmodul 600 und die untergeordneten Integrationsmodule 610 bzw. 611 bis 615 gebildet (vgl. Figur 6a).

Nach der Initialisierung über Rootintegrationsmodul 610 und die Modulhierarchie empfängt Integrationsmodul 611 Daten aus Informationsverarbeitungssystem 601 und erstellt aus ihnen den Datencontainer 630, Sektion 631 (vgl. Figur 6b). Im zweiten Schritt, ermittelt das Integrationsmodul 612, beispielsweise durch Aufruf einer geeigneten Funktion Im Informationsverarbeitungssystem 602 einen neuen Schlüssel für den zu übertragenden Datensatz im Informationsverarbeitungssystem 602- Der neue Schlüssel wird in den Datencontainer 630, Sektion 632 eingetragen. Im dritten Schritt erstellt Integrationsmodul 613 einen zum Informationsverarbeitungssystem 602 kompatiblen Datensatz und legt diesen in Datencontainer 630 Sektion 633 ab. Im vierten Schritt überträgt das Integrationsmodul 614, diesen Datensatz aus Sektion 633 des Datencontainers 630 in das Informationsverarbeitungssystem 602.

Im letzten Schritt, erstellt das Integrationsmodul 615 unter Verwendung der Daten in Datencontainer 630 eine Zuordnungsstruktur und speichert sie im Datencontainer 634 auf einem permanenten Speichermedium, beispielsweise in einer Datenbank ab.

Die in den zuvor im Detail beschriebenen Ausführungsformen sind in keinster Weise als beschränkend zu verstehen. Vielmehr lassen sich die beschriebenen Integrationsmodule auf vielfältigste Weise miteinander kombinieren, um so Applikationsintegrator für verschiedenartige Informationsverarbeitungssysteme zum Zugriff auf die Schnittstellen der Informationsverarbeitungssysteme und/oder zur internen Verarbeitung und/oder zur Umsetzung von Datenstrukturen, Datenformaten und Dateninhalten zwischen Anwendungssystemen der Informationsverarbeitungssysteme und/oder zur Steuerung von Austauschprozessen zwischen den Informationsverarbeitungssystemen zu schaffen.

## Patentansprüche

1. Applikationsintegrator für verschiedenartige Informationsverarbeitungssysteme zum Zugriff auf die Schnittstellen der Informationsverarbeitungssysteme und/oder zur internen Verarbeitung und/oder zur Umsetzung von Datenstrukturen, Datenformaten und Dateninhalten zwischen Anwendungssystemen der Informationsverarbeitungssysteme und/oder zur Steuerung von Austauschprozessen zwischen den Informationsverarbeitungssystemen, umfassend
eine Mehrzahl von Integrationsmodulen, die in wenigsten zwei Hierachieebenen angeordnet sind,
jedes Integrationsmodul derart strukturiert ist, dass es einen Teil A und einen Teil B umfasst, wobei
der Teil A eines jeden Integrationsmoduls so ausgebildet ist, dass durch ihn eine Kommunikation dieses Integrationsmoduls mit wenigstens einem Integrationsmodul einer niedrigeren und/oder einer höheren Hierachieebene realisierbar ist, und durch die Teile A aller Integrationsmodule die Bearbeitungsreihenfolge aller Integrationsmodule innerhalb des Applikationsintegrators festgelegt ist,
der Teil B eines jeden Integrationsmoduls so ausgebildet ist, dass ein Zugriff auf die Schnittstellen der Informationsverarbeitungssysteme und/oder eine interne Verarbeitung und/oder eine Umsetzung von Datenstrukturen, Datenformaten und Dateninhalten zwischen Anwendungssystemen der Informationsverarbeitungssysteme und/oder eine Steuerung von Austauschprozessen zwischen den Informationsverarbeitungssystemen realisierbar ist.

2. Applikationsintegrator nach Anspruch 1, in welchem wenigstens ein Datencontainer vorgesehen ist, in den im Rahmen der Abarbeitung des Teils B wenigstens eines Integrationsmoduls Daten ablegbar und/oder aus dem im Rahmen der Abarbeitung des Teils B wenigstens eines Integrationsmoduls Daten entnehmbar sind.

3. Applikationsintegrator nach Anspruch 2, in welchem dem wenigstens einen Integrationsmodul definierte Sektionen innerhalb eines Datencontainer für den Datenzugriff und die Datenablage zugeordnet sind.

4. Applikationsintegrator nach Anspruch 2 oder 3, in welchem im Rahmen der Abarbeitung des Teils B wenigstens eines Integrationsmoduls Daten über die vorhandenen Schnittstellen eines Informationsverarbeitungssystems aus diesem übernehmbar und in einen Datencontainer überstellbar sind und/oder Daten aus dem oder einem Datencontainer über die Schnittstellen eines Informationsverarbeitungssystems in dieses überstellbar sind und/oder Daten aus dem oder einem Datencontainer zur Weiterverarbeitung zum Aufbau einer neuen Datenstruktur oder der Veränderung von Dateninhalten oder Datenformaten entnehmbar sind und in den oder einen Datencontainer überstellbar sind.

5. Applikationsintegrator nach einem der Ansprüche 2 bis 4, in welchem der wenigstens eine Datencontainer im Rahmen der Abarbeitung des Teils B wenigstens eines Integrationsmoduls innerhalb des Arbeitsspeichers eines Computersystems einrichtbar ist oder auf einem permanenten Speichermedium eines Computers vorsehbar ist.

6. Applikationsintegrator nach einem der Ansprüche 2 bis 5, in welchem der wenigstens eine Datencontainer wenigstens ein Segment oder wenigstens eine Gruppe von Segmenten aufweist, das oder die jeweils einer vorgebbaren Datenstruktur entspricht und sich wenigstens einmal wiederholt.

7. Applikationsintegrator nach Anspruch 6 in Verbindung mit Anspruch 2, in welchem die Sektion innerhalb des wenigsten einen Datencontainers in Form eines Segments oder in Form einer Gruppe von Segmenten vorgesehen ist.

8. Applikationsintegrator nach einem der Ansprüche 2 bis 7, in welchem der wenigstens eine Datencontainer eine einheitliche Strukturdefinition aufweist und wenigstens das auf den Datencontainer zugreifende Integrationsmodul über dieselbe Strukturdefinition Daten in den Datencontainer überstellt und/oder Daten aus dem Datencontainer ausliest.

9. Applikationsintegrator nach einem der vorangegangenen Ansprüche, in welchem die Teile A aller Integrationsmodule so ausgebildet sind, dass unabhängig voneinander abarbeitbare Integrationsmodule parallel abarbeitbar sind.

10. Applikationsintegrator nach einem der vorangegangenen Ansprüche, insbesondere nach Anspruch 9, in welchem wenigstens ein Integrationsmodul mehrfach vorgesehen ist.

11. Applikationsintegrator nach einem der vorangegangenen Ansprüche, in welchem wenigstens ein Servicemodul zum Protokollieren der Datenübertragungsprozesse und/oder zur Meldung und Behandlung von Fehlern und/oder zum zeit- und/oder ereignisgesteuerten Initiieren der Datenübertragungsprozesse vorgesehen ist.

12. Verfahren zur Erzeugung eines Applikationsintegrators nach einem der Ansprüche 1 bis 11 mit den Schritten:
Erzeugen der Teile A und Teile B eines jeden Integrationsmoduls in einem Arbeitsspeicher eines Computersystems, und
gegebenenfalls Erzeugen eines Datencontainers in einem Arbeitsspeicher oder einem permanenten Speicher des Computersystems.

13. Verfahren zum Betreiben eines Applikationsintegrators nach einem der Ansprüche 1 bis 11, in welchem Daten aus einem Informationsverarbeitungssystem übernommen und/oder Daten verarbeitet und/oder Datenstrukturen, Dateninhalte und Datenformate umgesetzt und/oder Daten an ein Informationsverarbeitungssystem übergeben und/oder die Übertragungsprozesse zwischen Informationsverarbeitungssystemen gesteuert werden, und
die Abarbeitung der einzelnen Integrationsmodule in einer dem gewünschten Datenfluss zweckdienlichen Reihenfolge innerhalb einer Hierarchie festlegt werden, wobei bei der Abarbeitung eines jeden Integrationsmoduls die Integrationsmodule der unter diesem Integrationsmodul liegenden Hierachieebene einbezogen werden.

14. Verfahren nach Anspruch 13, in welchem im Rahmen der Abarbeitung des Teils B eines jeden Integrationsmoduls Steuerparameter und gegebenenfalls Datencontainer vom vorhergehenden Modul übernommen und an das jeweils folgende Integrationsmodul weitergeben werden.

15. Verfahren nach Anspruch 14, in welchem die Steuerparameter der Integrationsmodule in einer Designphase mittels eines Designertools vorgegeben und in einem permanenten Datenspeicher abgelegt werden.

16. Verfahren nach Anspruch 15, in welchem die Integrationsmodule ihre in der Designphase festgelegten Steuerparameter vor der Ausführung von Datenaustauschprozessen aus dem permanenten Datenspeicher auslesen.

17. Verfahren nach einem der Ansprüche 13 bis 16, in welchem die Integrationsmodule dynamisch in einem Speichermedium eines Computersystems vor der Ausführung von Datenaustauschprozessen erzeugt werden.
